# EUROPEAN PATENT APPLICATION

(11) **EP 2 378 510 A1**
(43) Date of publication of application: **19.10.2011**
(21) Application number: 09834599.4
(22) Date of filing: 05.10.2009
(51) Int. Cl.: G09G 3/36, F21S 2/00, G02F 1/133, G09G 3/20, G09G 3/34, H04N 5/66, F21Y 103/00

(54) **LIQUID CRYSTAL DISPLAY DEVICE AND TELEVISION RECEPTION DEVICE**

(30) Priority: 26.12.2008 JP 2008333286
(71) Applicant: Sharp Kabushiki Kaisha, Osaka-shi, Osaka 545-8522 (JP)
(72) Inventor: ARAI, Masahiro, Osaka-shi Osaka 545-8522 (JP)
(74) Representative: Goddar, Heinz J.
(86) International application number: PCT/JP2009/067328
(87) International publication number: WO 2010/073793

(57) **Abstract**

A liquid crystal display device includes a backlight unit that illuminates a rear surface of a liquid crystal panel and a backlight control section. The backlight unit includes one end that receives a first dimming signal Sdv1 and another end that receives a second dimming signal Sdv2. The backlight unit includes a fluorescent tube two ends of which are driven. The backlight control section generates the first dimming signal Sdv1 and the second dimming signal Sdv2 and supplies the first dimming signal and the second dimming signal (Sdv1, Sdv2) to the fluorescent tube to control luminescence brightness Lca of the backlight unit. The backlight unit control section stops supply of one of the first dimming signal Sdv1 and the second dimming signal sdv2 to the fluorescent tube in response to detection that an image on the liquid crystal panel is a black display image.

## Description

### TECHNICAL FIELD

The present invention relates to a liquid crystal display device and a television receiver including the liquid crystal display device, and more particularly relates to power saving of a backlight unit having a fluorescent tube two ends of which are driven.

### BACKGROUND ART

A backlight unit using discharge tubes such as CCFL (cold cathode fluorescent tubes) has been known as a backlight unit of a liquid crystal display device of a liquid crystal television. A backlight unit using a plurality of LED (Light Emitting Diode) elements has been recently used. Generally, power consumption of the liquid crystal display device is greater in the backlight unit than in the liquid crystal panel. Therefore, it is required to reduce the power consumption of the backlight unit to suppress increase of the power consumption due to increase in size of the liquid crystal display device.

For example, Patent Document 1 discloses a technology of reducing power consumption of the backlight unit as described below. If the backlight unit has no image signal that is to be displayed on a liquid crystal panel in a standby mode, an auxiliary image is displayed on the liquid crystal panel and the LED elements corresponding to the black display parts of the auxiliary image are turned off.
[Patent Document 1] Japanese Unexamined Patent Publication No. 2007-86390

### (Problem to be Solved by the Invention)

In the above-described technology, power saving is achieved with providing good impressions to audience when there is no image signal such as a TV image signal (in a standby mode). However, even if there is an image signal, power saving of the backlight unit may be achieved in an entire area of the liquid crystal panel depending on a display image. Therefore, it is desired to achieve power saving of the backlight unit in an entire area of the liquid crystal panel with a simple method. According to increase in size of the liquid crystal display device, a fluorescent tube two ends of which are driven is used in the backlight unit. Therefore, it is desired to achieve power saving of the backlight device including the fluorescent tube two ends of which are driven.

### DISCLOSURE OF THE PRESENT INVENTION

The present invention was made in view of the foregoing circumstances. An object of the present invention is to provide a liquid crystal display device and a television receiver having the liquid crystal display device that easily achieves power saving of an entire area of a liquid crystal panel of a backlight unit including a fluorescent tube two ends of which are driven.

### (Means for Solving the Problem)

To solve the above problem, a liquid crystal display device of the present invention includes a liquid crystal panel configured to display images, a backlight unit, a backlight control section and an image signal processing section. The backlight unit is configured to illuminate a rear surface of the liquid crystal panel and includes a fluorescent tube two ends of which are driven and having one end for receiving a first dimming signal and another end for receiving a second dimming signal. The backlight unit control section is configured to generate the first dimming signal and the second dimming signal and supply the first dimming signal and the second dimming signal to the fluorescent tube to control luminescence brightness of the backlight unit. The image signal processing section is configured to control the liquid crystal panel and the backlight unit based on an image signal and detect that the image on the liquid crystal panel is a black display image. The backlight unit control section stops supply of one of the first dimming signal and the second dimming signal to the fluorescent tube in response to detection of the black display image.

With such a configuration, the backlight unit control section stops supply of one of the first dimming signal and the second dimming signal to the fluorescent tube in response to the detection of the black display image by the image signal processing section. This easily achieves power saving of the backlight unit using a fluorescent tube two ends of which are driven in an entire area of the liquid crystal panel.

In such a case, because another one of the first dimming signal and the second dimming signal is continuously supplied to one end of the fluorescent tube two ends of which are driven, the one end of the fluorescent tube is continuously driven and light is continuously emitted therefrom. Therefore, when the display on the liquid crystal panel is changed from the black display and one end of the fluorescent tube that is not driven is started to be driven to emit light, this operation is executed in a smooth manner. Namely, luminescence brightness of the backlight unit is improved in a smooth manner.

In response to the detection of the black display image, the backlight unit control section may lower luminescence brightness of the backlight unit generated by another one of the first dimming signal and the second dimming signal that is supplied to the fluorescent tube. With such a configuration, power consumption of the backlight unit is further reduced.

The first dimming signal and the second dimming signal may be burst signals for switching between lighting on and off of the fluorescent tube and in response to the detection of the black display image, the backlight unit control section may reduce amplitude and/or a duty cycle of the another one of the first dimming signal and the second dimming signal. With such a configuration, if the backlight unit includes a fluorescent tube, power consumption of the backlight unit is reduced with a simple and preferable method.

The backlight unit may include a number of fluorescent tubes that are arranged parallel to each other. The first dimming signal and the second dimming signal may be supplied to each fluorescent tube such that one end of each fluorescent tube to which the dimming signal is not supplied in response to the detection of the black display image and another end of each of the fluorescent tubes to which the dimming signal is supplied are alternately provided. With such a configuration, if driving of one end of each fluorescent tube is stopped, the one end of the fluorescent tube driving of which is stopped and the another end of the fluorescent tube that is driven are provided alternately. Accordingly, uneven luminescence brightness of the backlight unit is less likely to occur.

A television receiver of the present invention includes the liquid crystal display device. With such a configuration, power saving of the television receiver is achieved as a result of power saving of the liquid crystal display device.

### (Advantageous Effect of the Invention)

The present invention provides a liquid crystal display device and a television receiver including the liquid crystal display device that easily achieves power saving of an entire area of a liquid crystal panel of a backlight unit including a fluorescent tube two ends of which are driven.

### BRIEF DESCRIPTION OF THE DRAWINGS

[FIG. 1] is a block diagram illustrating a general electrical configuration of a television receiver according to an embodiment of the present invention;
[FIG. 2] is a cross-sectional view illustrating a general construction of a liquid crystal display device;
[FIG. 3] is a plan view illustrating a general construction of a backlight unit of the liquid crystal display device;
[FIG. 4] is a timing chart generally illustrating time-shift of each signal relating to power saving control of a backlight unit;
[FIG. 5] is a timing chart generally illustrating another example relating to the power saving control of the backlight unit;
[FIG. 6] is a timing chart generally illustrating another example relating to the power saving control of the backlight unit; and
[FIG. 7] is a plan view generally illustrating another construction of the backlight unit of the liquid crystal display device.

### Explanation of Symbols

31, 31A: Two ends-driven fluorescent tube, 100: Liquid crystal display device, 102: Image signal processing section, 104: Liquid crystal panel, 107: Backlight unit control section, 108: Dimming control circuit (Backlight unit control section), 109: Inverter (Backlight unit control section), 110: Backlight unit, 200: Television receiver, Sdv1: First dimming signal, Sdv2: Second dimming signal

### BEST MODE FOR CARRYING OUT THE INVENTION

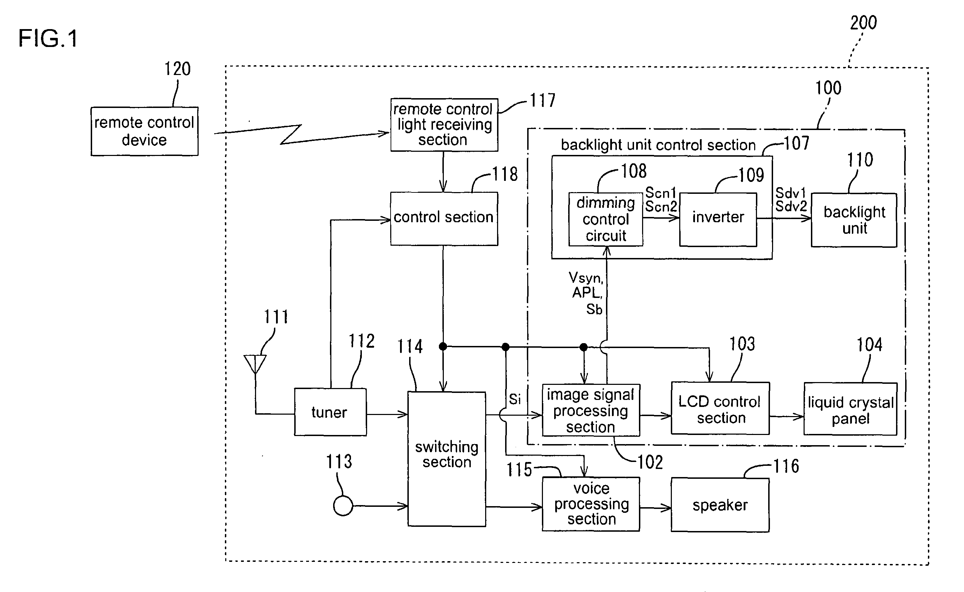

One embodiment of the present invention will be explained with reference to FIGS. 1 to 4. In the present embodiment, a television receiver including a liquid crystal display device of the present invention will be explained. The liquid crystal display device of the present invention is not limited thereto but may be applied to any devices capable of displaying images such as a personal computer, a game machine, a measuring device and the like.

### 1. Structure of Television Receiver

FIG. 1 is a general block diagram illustrating a construction of a television receiver 200 including a liquid crystal display device 100 of the present invention. In the television receiver 200, an antenna 11 receives television broadcasting signals and a tuner 112 tunes in one of the received signals. A video input terminal 113 receives video signals from an AV device that is built in the television receiver 200 or externally connected to the television receiver 200. A switching section 114 switches between the television broadcasting signal selected by the tuner 112 and the video signal input via the video input terminal 113 and outputs the switched signal. The image signal Si output from the switching section 114 is processed by an image signal processing section 102 of the liquid crystal display device 100.

In the television receiver 200, voice signals output from the switching section 114 are processed by a voice processing section 115 and voice is output from a speaker 116. A remote control light receiving section 117 receives infrared rays representing remote control operation signals that are transmitted from a remote control device 120 and transmits the received signals to a control section 118. The control section 118 detects and analyzes the remote control operation signals received by the remote control light receiving section 117 and outputs control signals to the tuner 112, the switching section 114, the image signal processing section 102, an LCD control section 103 and the voice processing section 115 to control the operations thereof.

### 2. Construction of Liquid Crystal Display Device

Next, the liquid crystal display device 100 will be explained. As illustrated in FIG. 1, the liquid crystal display device 100 includes the image signal processing section 102, the LCD (liquid crystal display device) control section 103, the liquid crystal panel 104, a backlight unit control section 107 and the backlight unit 110.

The image signal processing section 102 processes an image signal Si input to the liquid crystal display device 100 or an image signal Si that is read from a recording medium of a read/write device (not illustrated) that is built in the liquid crystal display device 100. The image signal processing section 102 performs various image quality improvement processing to the image signal Si if necessary and generates image display signals such as RGB signals appropriate for activating the liquid crystal panel 104. The generated image display signals are transmitted to the LCD control section 103.

The image signal processing section 102 generates backlight unit control signals such as vertical synchronizing signals Vsyn that are to be transmitted to the backlight unit control section 107 to control light emission of the backlight unit 110. The image signal processing section 102 computes an average picture level (APL) based on the image signals Si and generates an APL signal according to the APL as the backlight unit control signal. For example, if the APL is equal to or less than a black display determination value Ath, the image signal processing section 102 detects that an image that is to be displayed on the liquid crystal panel 104 is a black display image and generates a black display detection signal Sb. In this embodiment, the black display determination value Ath is set to be 3 % or less. The APL signal and the black display detection signal Sb are transmitted to the backlight unit control section 107.

The LCD control section 103 generates LCD data that is light transmission data of each pixel of the liquid crystal panel 104 according to the image display signal transmitted from the image signal processing section 102. The LCD control section 103 generates an LCD drive signal according to the LCD data and transmits the LCD drive signal to the liquid crystal panel 104 to control image display on the liquid crystal panel 104.

The liquid crystal panel 104 is formed in a rectangular shape with a plan view and constructed such that a pair of glass substrates is bonded together with a predetermined gap therebetween and liquid crystal is sealed between the glass substrates.

On one of the glass substrates, switching components (e.g., TFTs (thin film transistors)) connected to source lines and gate lines that are perpendicular to each other, pixel electrodes connected to the switching components, and an alignment film are provided. On the other substrate, a color filter having color sections such as R (red), G (green) and B (blue) color sections arranged in a predetermined pattern, common electrodes, and an alignment film are provided.

With such a construction, for example, color pixels of 1920 * 1080 dots for high vision are formed in the liquid crystal panel 104. Further, an LCD driver is provided in the liquid crystal panel 104. The LCD driver controls the switching element of each pixel according to the LCD drive signal transmitted from the LCD control section 103 and the image is displayed on the liquid crystal panel 104 according to the image signals Si.

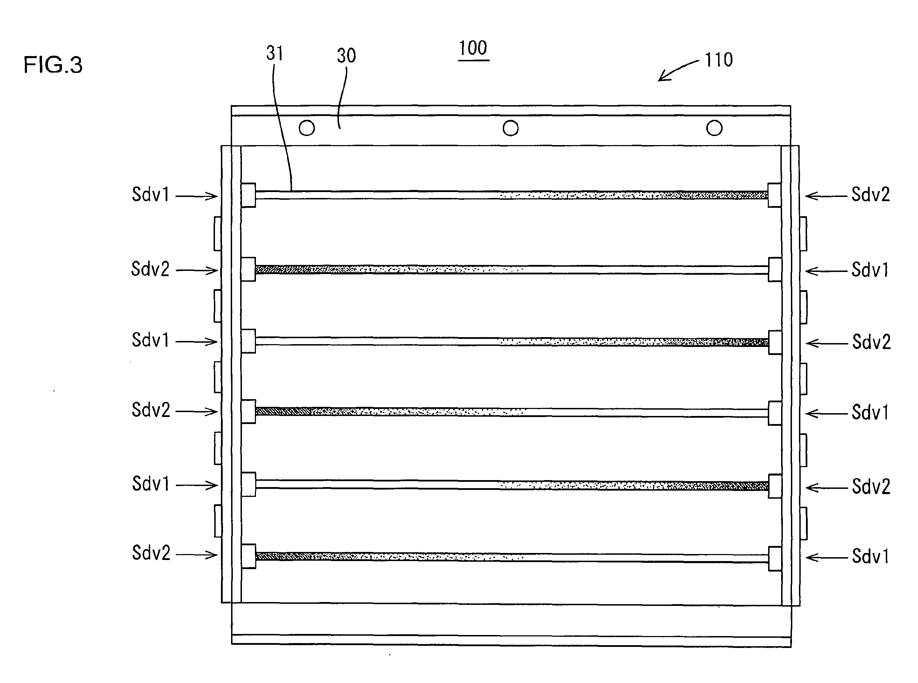

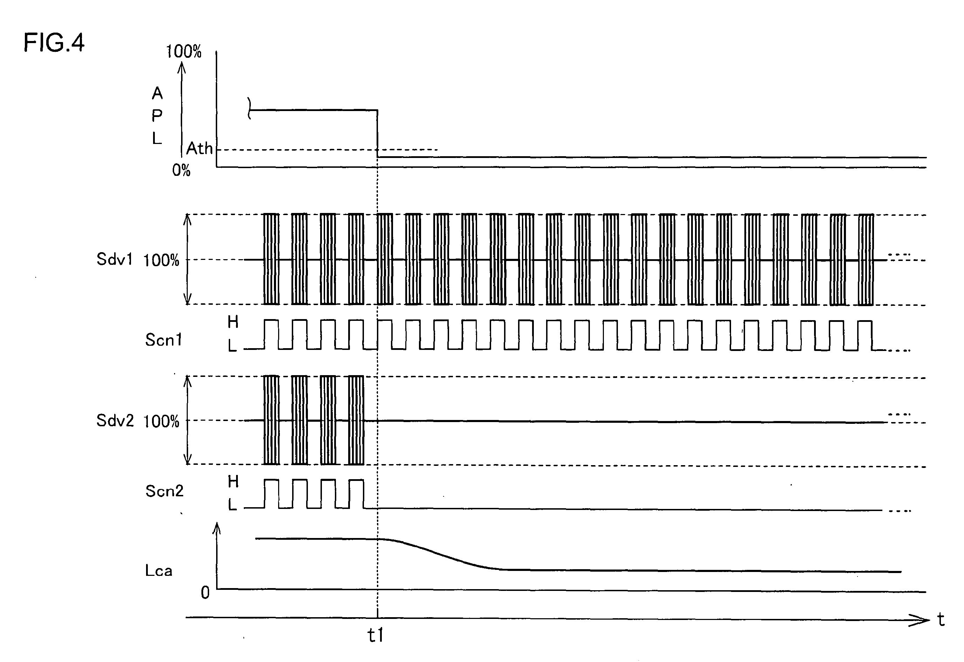

The backlight unit control section 107 includes the dimming control circuit 108 and the inverter 109. The backlight unit control section 107 generates a first dimming signal Sdv1 and a second dimming signal Sdv2 in response to the detection of a black display image by the image signal processing section 102 and transmits the first dimming signal Sdv1 and the second dimming signal Sdv2 to the backlight unit 110 (see FIGS. 3 and 4). The first dimming signal Sdv1 and the second dimming signal Sdv2 lower luminescence brightness of the backlight unit 110.

The dimming control circuit 108 generates a first control signal Scn1 and a second control signal Scn2 that is a pulse width modulation (PWM) signal (see FIG. 4). The PWM signal changes a signal duration ratio (duty cycle) of a high potential level and a low potential level of a rectangular wave according to the APL signal transmitted from the image signal processing section 102.

The inverter 109 has a known configuration. The inverter 109 generates a first dimming signal Sdv1 and a second dimming signal Sdv2 each of which is burst AC voltage according to the first control signal Scn1 and the second control signal Scn2. The first dimming signal Sdv1 and the second dimming signal Sdv2 are supplied to the backlight unit 110 as a drive signal for driving a two ends-driven fluorescent tube 31 (see FIG. 3). The inverter 109 executes a switching operation when the control signal (Scn1, Scn2) is at a high potential level and stops the switching operation when the control signal is at a low potential level. Thus, the inverter 109 executes an intermittent action according to the duty cycle of the control signal (Scn1, Scn2) and generates burst dimming signals (Sdv1, Sdv2) (see FIG. 4). Brightness of the backlight unit 110 is controlled by the duty cycle and amplitude of the burst dimming signal (Sdv1, Sdv2).

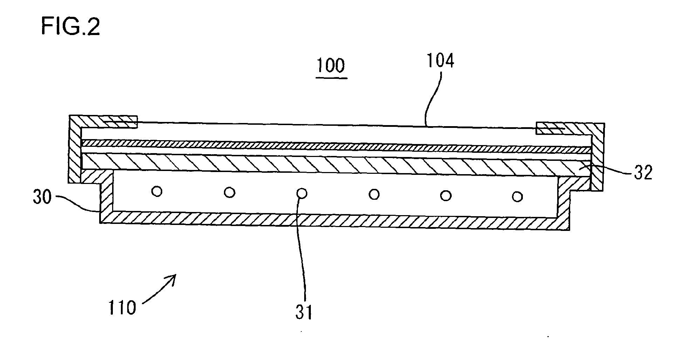

The backlight unit 110 irradiates a rear surface of the liquid crystal panel 104 with light and the liquid crystal panel 104 controls an amount of light that is irradiated and transmits through the liquid crystal panel 104 to form an image thereon. As illustrated in FIGS. 2 and 3, the backlight unit 110 of the present embodiment includes a frame 30 that is attached to the rear surface of the liquid crystal panel 104. In the frame 30,
a number of fluorescent tubes of narrow tubes (straight tube type) such as CCFL (cold cathode fluorescent tubes) 31 are arranged parallel to each other at equal intervals. Two sides of each fluorescent tube are driven. In FIGS. 2 and 3, six fluorescent tubes 31 are illustrated. In FIG. 3, one side of each fluorescent tube 31 is driven in response to the detection of the black display image on the liquid crystal panel 104.

Each fluorescent tube 31 is driven to be lit on by the first dimming signal Sdv1 and the second dimming signal Sdv2 that are supplied to the two ends of the fluorescent tube 31, respectively. A diffuser plate 32 evenly diffuses illumination light emitted from each fluorescent tube 31. Such a florescent tube 31 two ends of which are driven is used for a large liquid crystal panel 104.

As illustrated in FIG. 3, the first dimming signal Sdv1 and the second dimming signal Sdv2 are supplied alternately to the two ends of each of the adjacent fluorescent tubes 31. As will be described later, respective one ends of the fluorescent tubes 31 to which the dimming signal is not transmitted in response to the detection of the black display image on the liquid crystal panel 104 are alternately provided (see FIG. 3). Accordingly, uneven luminescence brightness is less likely to occur in the backlight unit 110.

### 3. Power Saving Control of Backlight Unit

With reference to FIGS. 3 and 4, power saving control of the backlight unit will be explained. FIG. 4 is a timing chart generally illustrating time-shift of each signal relating to power saving control of the backlight unit.

If the image displayed on the liquid crystal panel 104 at time t1 in FIG. 4 is changed to the black display, the APL value computed by the image signal processing section 102 is lowered to approximately 0% and it is lower than the black display determination value Ath (for example, 3%). Accordingly, the image signal processing section 103 detects a black display of the displayed image and generates the black display detection signal Sb. The black display detection signal Sb is transmitted to the dimming control circuit 108. The black display determination value Ath is appropriately set as the APL value for determining a black display. The black display determination value Ath may be changed according to a type of the image that is to be displayed on the liquid crystal panel 104.

When receiving the black display detection signal Sb, the dimming control circuit 108 of the backlight unit control section 107 controls the duty cycle of the second control signal Scn2 to be 0% as illustrated in FIG. 4 and stops generation of the second dimming signal Sdv2 by the inverter 109. Namely, at the time t1 in FIG. 4, one side of each fluorescent tube 31 is driven by the first dimming signal sdv1 (see FIG. 3). This reduces power consumption of the backlight unit 110. As illustrated in FIG. 4, the luminescence brightness Lca of the backlight unit 110 is lowered to a predetermined level after the time t1.

In such a case, discharge from the fluorescent tubes 31 is not completely stopped. Therefore, when the display on the liquid crystal panel 104 is changed from the black display and the second dimming signal Sdv2 is supplied to one ends of the fluorescent tubes 31 that are not driven to improve the luminescence brightness Lca, the driving of the fluorescent tubes 31 is executed in a smooth manner.

As explained above, in the present embodiment, the dimming control circuit 108 of the backlight unit control section 107 stops transmission of one of the first dimming signal Sdv1 and the second dimming signal Sdv2 to each fluorescent tube 31 in response to the detection of the black display image by the image signal processing section 102. In the present embodiment, the dimming control circuit 108 stops transmission of the second dimming signal Sdv2. A configuration that is normally mounted for controlling driving of the fluorescent tubes 31 two ends of which are driven can be used for this control. Therefore, in using the fluorescent tube 31 two ends of which are driven, power saving of the backlight unit 110 is easily achieved in an entire area of the liquid crystal panel 104 without providing any additional configurations that increase a cost.

As illustrated in FIG. 3, the first dimming signal Sdv1 and the second dimming signal Sdv2 are supplied alternately to the two ends of the two adjacent fluorescent tubes 31. Namely, respective one ends of the fluorescent tubes 31 to which the dimming signal (Sdv1 or Sdv2) is not supplied in response to the detection of the black display image are alternately provided.

Therefore, for example, if the transmission of the second dimming signal sdv2 to each fluorescent tube 31 is stopped, uneven luminescence brightness of the backlight unit 110 is less likely to occur compared to the case in that the first dimming signal Sdv1 and the second dimming signal sdv2 are supplied to the two ends of each fluorescent tube 31 respectively. Further, for example, compared to the case in that the first dimming signal Sdv1 is supplied to the left end of each fluorescent tube 31 and the second dimming signal Sdv2 is supplied to the right end of each fluorescent tube 31 in FIG. 3, uneven luminescence brightness of the backlight unit 110 is less likely to occur.

Each fluorescent tube 31 is continuously driven by another dimming signal that is continuously transmitted, that is the first dimming signal Sdv1 in the present embodiment. Therefore, luminescence brightness Lca is improved in a smooth manner when the display on the liquid crystal panel 104 is changed from the black display.

### <Other Embodiments>

The embodiments of the present invention have been described, however, the present invention is not limited to the above embodiments explained in the above description and the drawings. The following embodiments may be included in the technical scope of the present invention, for example.

(1) In the above embodiment, when receiving the black display detection signal Sb, the dimming control circuit 108 does not change the first control signal Scn1 and supplies the first dimming signal Sdv1 to each fluorescent tube 31. However, the backlight unit control section 107 (the dimming control circuit 108) may reduce amplitude and/or a duty cycle of the first dimming signal Sdv1 (an example of another dimming signal) in response to the detection of the black display image.

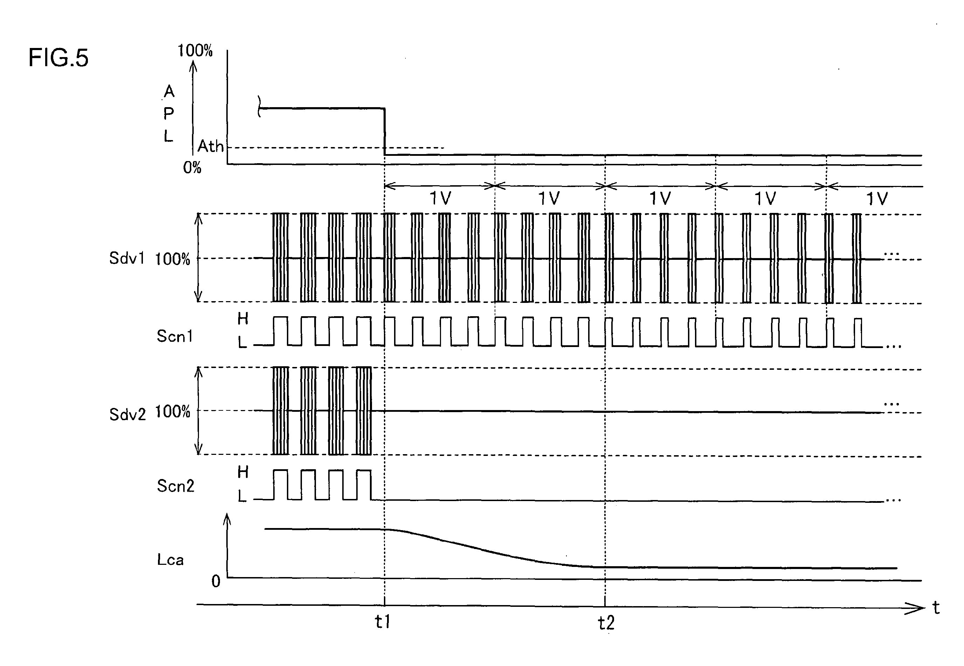

For example, as illustrated in FIG. 5, after the time t1 when receiving the black display detection signal Sb, the dimming control circuit 108 may reduce a duty cycle of the first control signal Scn1 (the first dimming signal Sdv1). In FIG. 5, the duty cycle of the first dimming signal Sdv1 is reduced at the time t1 and at the time t2 that is two frame periods later from the time t1. In such a case, the power consumption of the backlight unit 110 is reduced compared to the case in that the duty cycle of the first dimming signal Sdv1 is not reduced. The duty cycle of the first dimming signal Sdv1 is reduced as illustrated in FIG. 5, however, it may be reduced in any other methods according to a situation.

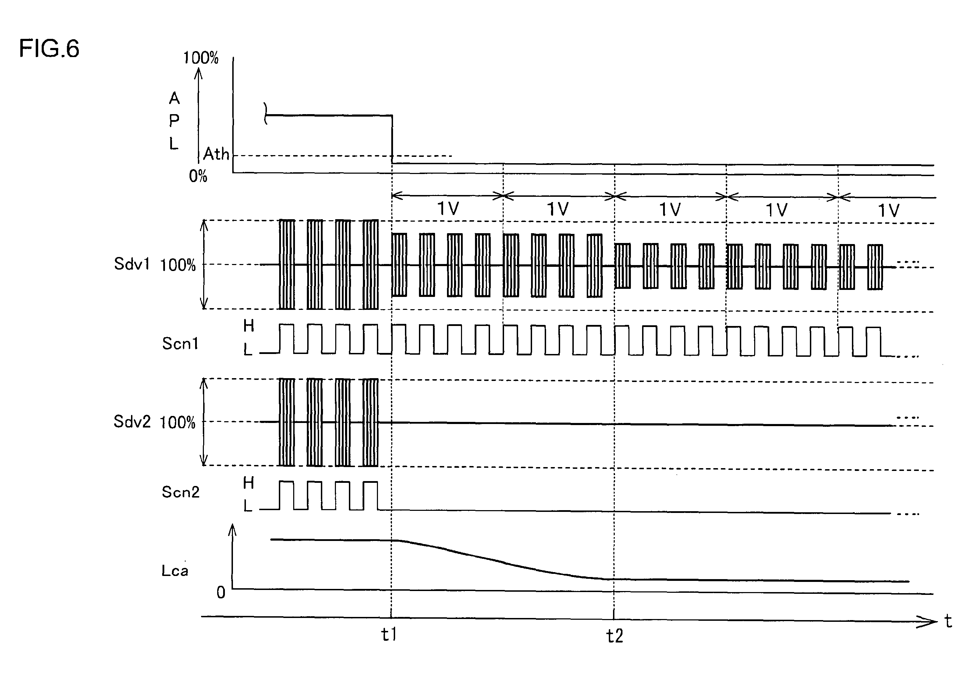

In FIG. 6, the amplitude of the first dimming signal Sdv1 is reduced at the time t1 and at the time t2 that is two frame periods later from the time t1. In such a case also, the power consumption of the backlight unit 110 is further reduced compared to the case in that the amplitude of the first dimming signal Sdv1 is not reduced. The amplitude of the first dimming signal Sdv1 is reduced as illustrated in FIG. 6, however, it may be reduced in any other methods according to a situation.

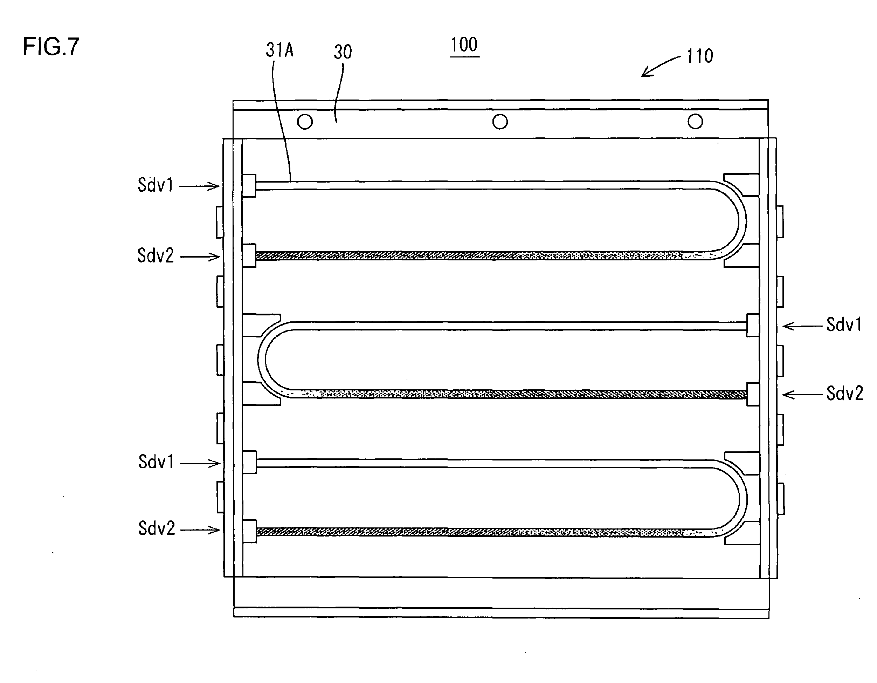

(2) In the above embodiment, the present invention is applied to the backlight unit 110 including the fluorescent tubes 31 of a straight tube type two ends of which are driven. However, as illustrated in FIG. 7, the present invention may be applied to the backlight unit 110 including fluorescent tubes 31A of an U-shaped tube type two ends of which are driven.

(3) In the above embodiments, the black display on the liquid crystal panel 104 is detected based on the APL (average picture level). However, for example, the black display on the liquid crystal panel 104 may be detected based on a black level signal included in the image signal Si or based on the APL and the black level signal. The black display on the liquid crystal panel 104 may be detected based on the APL and a maximum brightness level. The black display can be detected by detecting black display on the liquid crystal panel 104 based on the image signal Si.

(4) In the above embodiments, the black display on the liquid crystal panel 104 is detected based on the APL (average picture level). However, for example, the black display on the liquid crystal panel 104 may be detected based on a black level signal included in the image signal Si or based on the APL and the black level signal. The black display on the liquid crystal panel 104 may be detected based on the APL and a maximum brightness level. The black display can be detected by detecting black display on the liquid crystal panel 104 based on the image signal Si.

(5) In the above embodiments, after the time t1 when black display in the display image is detected, the dimming signal is always supplied to the same end of each fluorescent tube. However, for example, the dimming signal may be supplied alternately to each end of the fluorescent tube at every predetermined time period while the black display is on the display (after the time t1). Namely, the dimming signal applied to each end of each fluorescent tube may be generated to have a waveform of the first dimming signal Sdv1 and a waveform of the second dimming signal sdv2 illustrated in FIG. 4 alternately at a predetermined time period while the black display is on the display.

## Claims

1. A liquid crystal display device comprising:
a liquid crystal panel configured to display images;
a backlight unit configured to illuminate a rear surface of the liquid crystal panel and including a fluorescent tube two ends of which are driven and having one end for receiving a first dimming signal and another end for receiving a second dimming signal;
a backlight unit control section configured to generate the first dimming signal and the second dimming signal and supply the first dimming signal and the second dimming signal to the fluorescent tube to control luminescence brightness of the backlight unit; and
an image signal processing section configured to control the liquid crystal panel and the backlight unit based on an image signal and detect that the image on the liquid crystal panel is a black display image, wherein
the backlight unit control section stops supply of one of the first dimming signal and the second dimming signal to the fluorescent tube in response to detection of the black display image.

2. The liquid crystal display device according to claim 1, wherein in response to the detection of the black display image, the backlight unit control section lowers luminescence brightness of the backlight unit generated by another one of the first dimming signal and the second dimming signal that is supplied to the fluorescent tube.

3. The liquid crystal display device according to claim 2, wherein:
the first dimming signal and the second dimming signal are burst signals for switching between lighting on and off of the fluorescent tube; and
in response to the detection of the black display image, the backlight unit control section reduces amplitude and/or a duty cycle of the another one of the first dimming signal and the second dimming signal.

4. The liquid crystal display device according to any one of claims 1 to 3, wherein:
the backlight unit includes a number of fluorescent tubes that are arranged parallel to each other; and
the first dimming signal and the second dimming signal are supplied to each fluorescent tube such that one end of each of the fluorescent tubes to which the dimming signal is not supplied in response to the detection of the black display image and another end of each of the fluorescent tubes to which the dimming signal is supplied are alternately provided.

5. A television receiver comprising the liquid crystal display device according to any one of claims 1 to 4.
